**Europäisches Patentamt**

(19) **European Patent Office**

**Office européen des brevets**

(11) Numéro de publication: **0 048 663**
**B1**

(12) **FASCICULE DE BREVET EUROPEEN**

(45) Date de publication du fascicule du brevet:
**10.04.85**

(21) Numéro de dépôt: **81401432.0**

(22) Date de dépôt: **14.09.81**

(51) Int. Cl.⁴: **G 06 F 3/023**

(54) **Machine de bureau pour l'acquisition de données ou le traitement de l'information.**

(30) Priorité: **16.09.80 FR 8019954**

(43) Date de publication de la demande:
**31.03.82 Bulletin 82/13**

(45) Mention de la délivrance du brevet:
**10.04.85 Bulletin 85/15**

(84) Etats contractants désignés:
**BE CH FR IT LI SE**

(56) Documents cités:
**EP - A - 0 048 662
DE - A - 2 354 042
DE - A - 2 750 810
FR - A - 2 483 657
GB - A - 2 011 671
GB - A - 2 020 869
US - A - 3 978 328
US - A - 4 139 893**

**IBM TECHNICAL DISCLOSURE BULLETIN, vol. 21, no. 1, juin 1978, New York, US, KUHAR: "Multiplexed-coaxial wire bidirectional display terminal system", pages 53-59**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **De Pommery, Bertrand J. M. C. H., 94, avenue Gambetta, F-75020 Paris (FR)**
Inventeur: **Ugon, Michel, 94, avenue Gambetta, F-75020 Paris (FR)**

(74) Mandataire: **Doireau, Marc, CII-Honeywell Bull Division Propriété Industrielle 94, avenue Gambetta Boîte Postale 33, F-75960 Paris cedex 20 (FR)**

ACTORUM AG

## Description

La présente invention concerne une machine de bureau pour l'acquisition de données et le traitement de l'information.

Il est connu des machines de bureau de ce type généralement électroniques, permettant d'effectuer des introductions de données ou d'exécuter des fonctions en combinaison avec un clavier et un organe d'affichage des données et des résultats.

Ces machines se présentent le plus souvent sous la forme de terminaux à écran cathodique et se subdivisent au mieux en deux grandes familles:
– les machines simples étant exclusivement dépendantes d'une machine informatique dont elles sont des éléments d'entrée-sortie. Les fonctions de base de ces machines peuvent être accompagnées de fonctions particulières spécialisant la machine pour une utilisation donnée. C'est le cas, en particulier de fonctions permettant de stocker des données ou de les faire lire sur un des supports magnétiques
– les machines programmables, plus complexes, permettant à l'utilisateur de programmer lui-même les fonctions qu'il désire et de les stocker momentanément dans une mémoire volatile interne à la machine ou sur un support d'enregistrement magnétique.

En variante, ces machines peuvent quelquefois posséder un dispositif amovible passif qui a pour rôle de stocker des programmes spécialisés et figés par le constructeur sans possibilité d'évolution ou de modification par l'utilisateur.

Une autre possibilité permet à ces machines de posséder une sortie vers une imprimante de recopie permettant à l'utilisateur de lister des données ou des programmes.

Pour des raisons de fiabilité et de coût, toutes ces machines sont maintenant réalisées à partir de microprocesseurs, c'est-à-dire qu'elles possèdent une structure simplifiée d'ordinateur avec unité centrale, mémoire et canaux d'entrée-sortie.

Les principaux inconvénients des machines précitées sont de plusieurs ordres:
– ou bien la machine est entièrement dépendante d'un système informatique, ce qui est le cas des machines simples et il n'est pas possible
  – d'accéder à des fichiers personnalisés ou des supports amovibles indépendamment du système informatique
  – de réaliser des fonctions spécifiques au gré de l'utilisateur et des différentes applications;
– ou bien la machine programmable permet l'enregistrement de programmes ou de données sur supports magnétiques, dans ce cas, le support à piste magnétique est entièrement passif et ne peut exécuter lui-même des fonctions déchargeant la machine de celles-ci; de plus, le support à piste magnétique peut être aisément modifié ou détruit; il n'assure aucune sécurité ni confidentialité des informations et nécessite l'emploi d'un dispositif d'entraînement relativement coûteux;
– ou bien la machine programmable possède un support amovible mémorisant des programmes figés qu'il est impossible de personnaliser pour des raisons évidentes de coût et de production industrielle.

Le terminal décrit dans le brevet anglais n° 2 011 671 présente la particularité d'être portatif et de pouvoir coopérer avec au moins un support amovible. Cependant, ce support ne possède que des circuits de mémorisation constitués par une piste magnétique. Les échanges possibles d'informations entre le support et le terminal sont donc limités à la lecture ou à l'écriture d'une information sur la piste magnétique. Ces échanges sont limités du fait que le support ne possède pas des circuits de traitement.

Un des buts de la présente invention est d'éliminer les inconvénients ci-dessus en utilisant une architecture de machine qui permet la connexion et le dialogue bidirectionnel avec un support amovible possédant des capacités de stockage de données et de programmes ainsi que des possibilités de traitement de l'information.

Il est connu de tels supports et des composants associés objets des brevets français n° 2 401 459 et n° 2 461 301 de la demanderesse qui peuvent se présenter sous la forme d'une petite carte en matière plastique comprenant un microprocesseur autoprogrammable et des moyens de connexion à la machine sous forme de simples contacts électriques.

La machine possède un moyen de connexion correspondant comme ceux décrits dans la demande de brevet français n° 2 445 560 de la demanderesse.

L'invention propose donc une machine de bureau pour l'acquisition de données et le traitement de l'information, telle qu'elle est caractérisée dans les revendications.

Il est à noter que la demande de brevet EP-A-48 662, publiée le 31. 03. 82, a pour objet un coupleur de support électronique amovible dans lequel la liaison entre le coupleur et le support est effectuée à l'aide d'une liaison électrique bidirectionnelle unique.

Dans une première application, la machine ainsi constituée peut notamment être utilisée par des particuliers pour consulter des fichiers personnels, créés par les possesseurs de machine ou par tout organisme, tels que répertoires téléphoniques, fichiers médicaux, adresses, calendriers, agendas, etc…

Dans une deuxième application, la machine peut être utilisée pour introduire dans le support, des données confidentielles permettant d'accéder à des informations protégées de la mémoire du support amovible.

Dans une troisième application, la machine permet de visualiser l'état d'un compte financier personnel dont les informations ont été préalablement introduites par un organisme bancaire, ou de vente, dans le support amovible.

Dans une quatrième application, surtout dans le cas où la machine est connectée à un système informatique, la machine permet l'habilitation d'une personne à réaliser un certain nombre d'opérations, soit par l'intermédiaire d'un support amovible d'habilitation, soit par l'introduction directe de données d'habilitation tels que décrits dans les demandes de brevet n° 2 469 760 et n° 2 477 344 de la demanderesse.

Dans une cinquième application, la machine permet d'enregistrer dans les supports amovibles des programmes personnalisés au gré de l'utilisateur ou du fabricant de façon à spécialiser la machine sans autre limitation que celle de la taille des programmes à enregistrer.

On comprendra mieux les fondements de l'invention dans la description non limitative qui va suivre, donnée à titre d'exemple.

La figure 1 montre la machine vue de la face avant.

La figure 2 montre une coupe de la machine dans laquelle on a introduit un support amovible.

La figure 3 donne un schéma synoptique fonctionnel de la machine.

La figure 4 est une représentation des moyens nécessaires au dialogue entre la machine et le support amovible.

La figure 5 représente le diagramme des temps correspondant à la transmission d'un message d'un octet entre la machine et le support amovible.

La figure 6 est une représentation des circuits nécessaires à la transmission bidirectionnelle des messages entre la machine et le support amovible.

La figure 7 est une représentation des circuits de commande de la figure 4.

La figure 8 est une représentation des registres de travail du microprocesseur 8080 commercialisé par la société INTEL et utilisé dans la mise en œuvre de l'invention.

La figure 9 est un organigramme correspondant au fonctionnement du microprogramme d'émission des informations sur la ligne de transmission.

La figure 10 est un organigramme correspondant au microprogramme permettant le test de l'état de la ligne de transmission entre deux émissions.

Les figures 11 et 12 sont des organisgrammes correspondants aux microprogrammes de lecture des informations transmises par l'émetteur et reçues par le récepteur.

La figure 13 est une représentation des circuits d'alimentation P12 et P13.

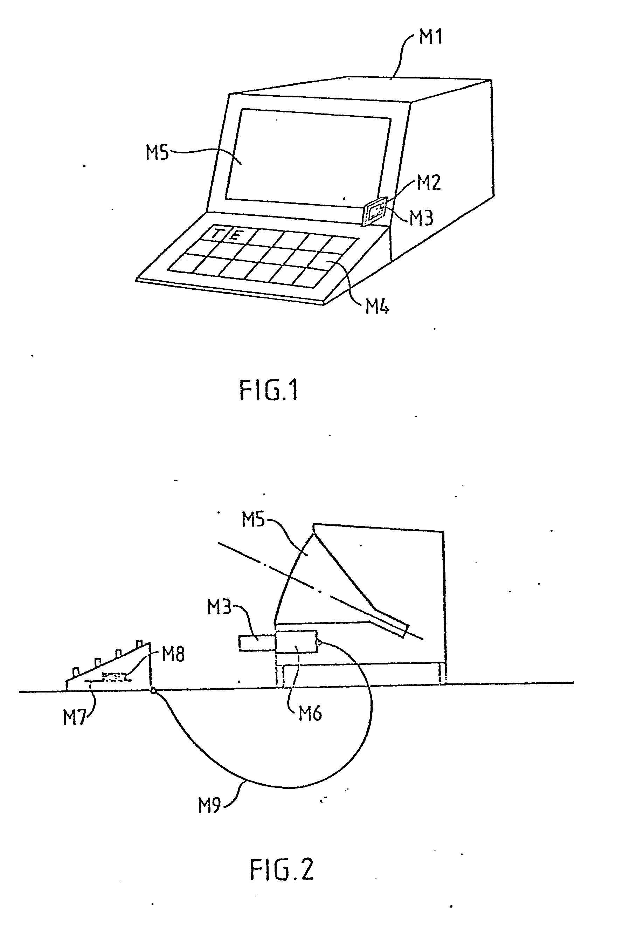

La figure 1 donne un des aspects de réalisation d'une machine.

L'ensemble est contenu dans un ensemble compact habituellement utilisé pur des terminaux à écran cathodique ou similaire dont le clavier est solidaire ou non de la carosserie générale.

Cet ensemble est muni d'une fente M2 permettant d'introduire le support amovible M3 dans la machine.

Les informations et données sont introduites par le moyen d'un clavier M4 possédant un nombre de touches variables.

Dans le cas de la figure 1, on distingue les touches de fonctions T et E.

Dans une application financière, par exemple, la touche T permet l'affichage direct du solde, tandis que la touche E permet de visualiser successivement les différents montants des transactions enregistrées par des appuis répétés.

La machine est munie d'un dispositif d'affichage M5 qui peut être un écran cathodique dont les technologies sont connues de l'homme de l'art.

La fente M2 permet l'introduction du support amovible dans la machine (figure 2) et son guidage jusqu'à l'introduction dans un bloc de contact M6 qui est relié au circuit M7 par l'intermédiaire d'un câble M9.

Ce circuit imprimé M7 supporte tous les composants électroniques de la machine, en particulier le microprocesseur M8.

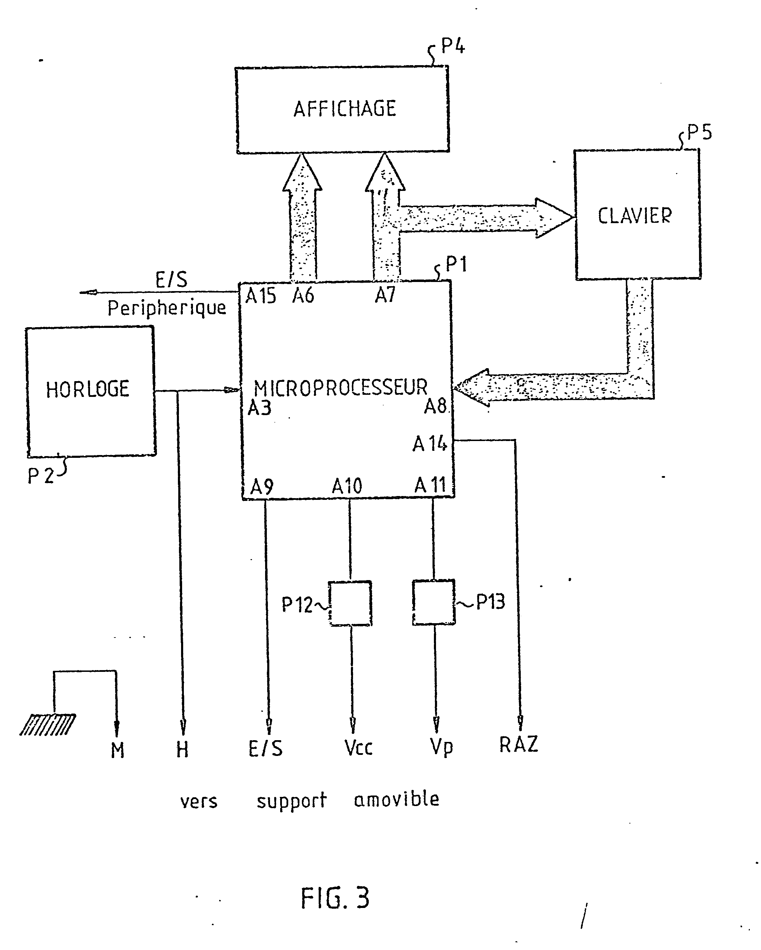

La figure 3 donne le synoptique de fonctionnement de la machine. Elle comprend un organe de traitement P1 cadencé par l'horloge P2 qui est également fournie au support amovible par l'intermédiaire de la liaison P3.

L'organe de traitement assure simultanément la gestion de l'organe d'affichage P4 et du clavier P5 par l'intermédiaire de trois portes d'entrée-sortie respectivement A6, A7 et A8.

La porte A6 sort le code du dernier caractère qui est introduit dans la mémoire d'écran de P4.

La porte A7 qui fonctionne en synchronisme assure le balayage des caractères et la scrutation du clavier.

La porte A8 assure la lecture du clavier.

L'organe de traitement élimine par programme les parasites et touches doublées sur le clavier.

En outre, une porte d'entrée-sortie bidirectionnelle A9 permet le dialogue asynchrone avec le support amovible.

Le support est mis sous tension par l'intermédiaire de la porte A10 et du circuit de commande P12.

Lorsque la machine doit écrire dans la mémoire du support amovible, elle délivre la tension d'écriture Vp en autorisant la porte A11 et le circuit de commande P13.

En outre, la commande directe A14 peut assurer une remise à zéro correcte du support avant le dialogue.

La porte A15 assure les liaisons entre l'organe de traitement P1 et les périphériques extérieurs à la machine.

Les organes de traitement du support amovible et de la machine sont constitués par des microprocesseurs qui permettent d'une part d'effectuer un dialogue entre le support amovible et la machine et d'autre part d'effectuer des traitements indépendants dans le support amovible et dans la machine. Ainsi, l'introduction par le clavier d'un mot de passe permet au support amovible de laisser libre l'accès aux données, ou aux programmes demandés par la machine. Le moyen de traitement de la machine peut exécuter directement des programmes contenus dans le support amovible de façon à exécuter dans la machine des fonctions dépendant d'informations contenues dans le support amovible. Des résultats de programmes enregistrés et exécutés dans le support amovible peuvent être traités par la machine pour exécuter des fonctions dépendant du support utilisé. Enfin, il est possible d'habiliter la machine à fonctionner avec des supports spécifiques. La machine pourra en effet lire dans la mémoire du support un code d'identification et calculer une fonction R du code d'identification et d'un code secret S. Le même calcul pourra s'effectuer à l'intérieur du support. A la fin des traitements, la machine pourra se livrer à une comparaison entre les fonctions R calculées à la fois dans le support et la machine. S'il y a égalité des résultats, la machine pourra en conclure qu'elle est habilitée à travailler avec ledit support. En conséquence toutes les informations provenant du ou allant vers le support amovible peuvent être traitées par le microprocesseur de la machine.

Dans le cas où le support amovible confère à la machine des fonctions spécifiques, il sera possible de munir la machine d'un cache portant des inscriptions permettant d'interpréter les données de l'affichage et de donner aux touches du clavier des significations particulières.

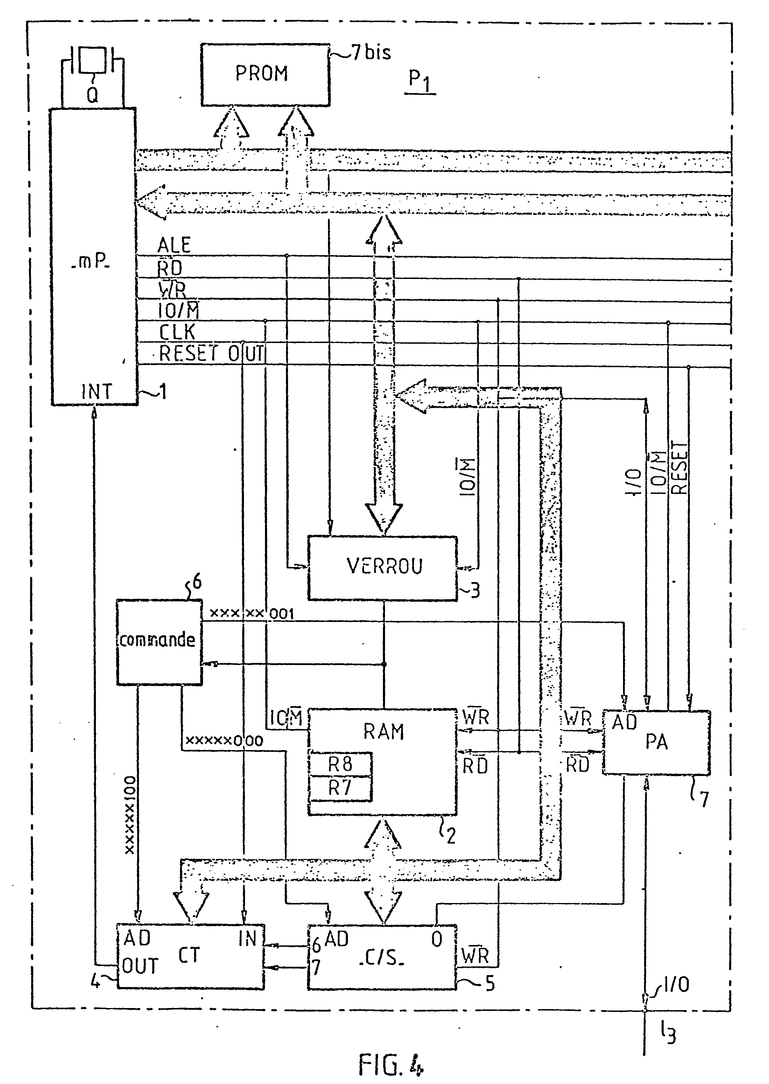

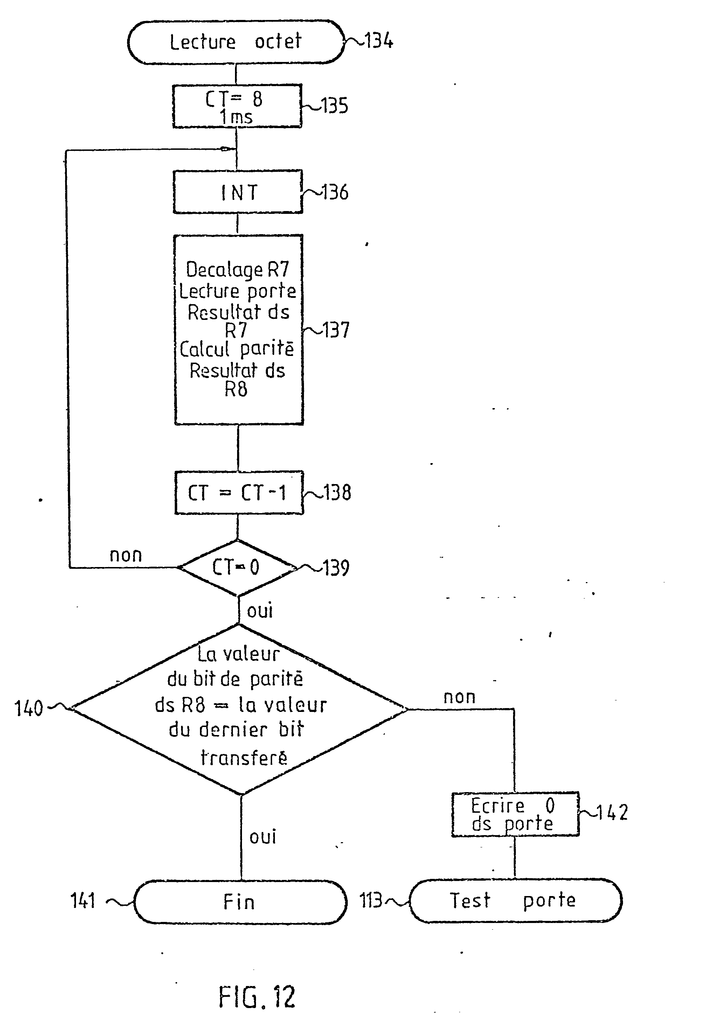

Le dialogue entre le support amovible et la machine est décrit ci-après à l'aide des figures 4 et 12.

La figure 4 représente le dispositif d'émission et de réception utilisé à la fois dans le support amovible et la machine. Il comprend au moins un microprocesseur 1, associé à un dispositif de commande des entrées-sorties des informations entrant ou sortant de la station, constitué par un dispositif de mémorisation 2, un dispositif de verrouillage 3, un compteur de temps 4, un registre d'états C/S 5, un organe de commande 6, une mémoire PROM7bis et un circuit 7 de transmission et réception des données connecté au conducteur de données 13. Le microprocesseur 1 peut être un microprocesseur du type 8080 ou 8085 commercialisé par la société INTEL. Ce microprocesseur peut être connecté à des éléments autres que ceux représentés sur la figure 2 par les lignes d'adresse $A_{8-15}$ et de données $AD_{0-7}$. Les 8 lignes de données $AD_{0-7}$ sont reliées à l'entrée d'un registre à verrouillage 3 pour adresser la mémoire à accès aléatoire RAM2. Cette mémoire RAM2 peut avoir une capacité de 2 K bits organisée en $256 \times 8$ bits. Elle contient un registre R7 pour mémoriser l'octet transféré au travers de la porte PA7 et un registre R8 pour mémoriser le bit de parité correspondant à l'octet transféré. Le registre 3 sélectionne aussi par l'état de ses sorties l'organe de commande 6.

L'organe de commande 6 sélectionne le circuit 7 de transmission-réception des données lorsque la configuration binaire mémorisée dans le registre 3 est XXXXX001, il sélectionne le registre d'état 5 lorsque la configuration binaire dans le registre 3 est XXXXX000 et enfin il sélectionne le compteur de temps 4 lorsque la configuration binaire dans le registre 3 est XXXXX100. Le compteur de temps 4 a ses entrées parallèlement reliées aux lignes de données $AD_{0-7}$ de façon à pouvoir être chargé à tout moment par le microprocesseur à une valeur de temps initiale. Le registre d'état C/S 5 est lui aussi relié aux lignes $AD_{0-7}$ pour lui permettre de mémoriser un ordre envoyé par le microprocesseur. C'est un registre à 8 bascules dont les états permettent la sélection soit du circuit d'entrée-sortie PA7 soit du compteur de temps CT4. La ligne ALE connecte le microprocesseur au registre 3 et transporte le signal de verrouillage du registre 3 pour autoriser ou non l'adressage de la mémoire RAM2 et de l'organe de commande 6.

La ligne IO/M sélectionne soit la mémoire RAM2 soit le circuit 7 d'entrée-sortie. Les lignes RD et WR commandent les opérations de lecture/écriture et sont reliées aux circuits de commandes appropriés de la mémoire RAM2 et du circuit 7.

Le microprocesseur est synchronisé par une horloge Q qui peut être un quartz, il transmet des signaux d'horloge sur la ligne CLK à l'entrée IN du compteur de temps CT4. La ligne RESET OUT est reliée à l'entrée du circuit 7 et permet d'initialiser le système en mode d'entrée-sortie.

La sortie du compteur de temps CT4 est reliée à l'entrée INT du microprocesseur 1 pour délivrer un signal d'interruption du traitement qui est en cours lorsque la valeur du compte initialement chargé à l'intérieur du compteur de temps CT4 est épuisée. Le microprocesseur 1 est également relié par ses lignes de données et d'adresse à une mémoire morte 7bis dans laquelle figurent inscrits les microprogrammes nécessaires à la transmission et à la réception des données par le support amovible ou la machine.

L'ensemble des dispositifs de la figure 4 qui vient d'être décrit constitue l'organe de traitement de la machine ou du support amovible.

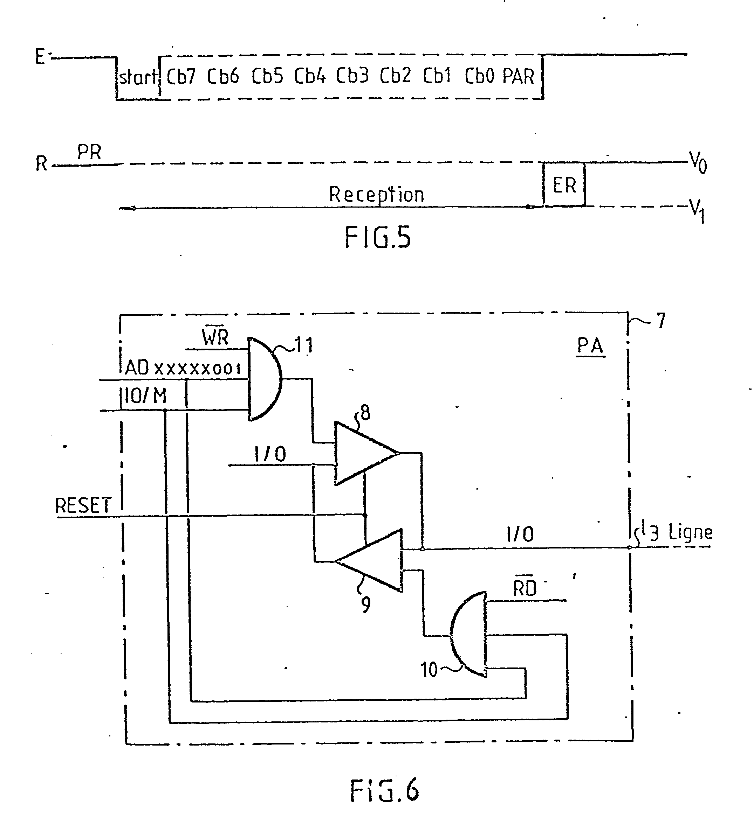

La figure 5 représente l'évolution dans le temps d'un message transmis sur le conducteur $1_3$. La transmission d'un message comportant 8 octets s'effectue sur 10 moments. Le premier moment est utilisé à transmettre le signal de début de message ou signal START, les moments 2 à 9 sont utilisés pour la transmission du message proprement dit, et le 10ème moment transmet le bit de parité du message.

Le récepteur reçoit les signaux transmis dans ces 10 moments et effectue un contrôle de parité pendant le 11ème. Le récepteur signale à l'émetteur qu'il est prêt à recevoir un message en positionnant le conducteur $1_3$ à un potentiel V0 (signal PR). Ce signal est positionné au moins un moment avant l'émission du signal START. Après réception et contrôle, le récepteur positionne l'état du conducteur $1_3$ à un potentiel V1 pendant la durée d'un moment, si le contrôle de parité effectué sur le message révèle qu'il y a eu erreur, on revient au potentiel V0 de départ si la transmission a eu lieu correctement.

Les 8 bits d'information constituant un octet sont transférés en série sur le conducteur $1_3$ et sont rangés successivement dans le registre R7 de la mémoire RAM2.

Ce transfert s'effectue par lecture successive de la porte PA7, transfert successif dans le registre accumulateur du microprocesseur récepteur et transfert après alignement du registre accumulateur dans le registre R7 de la mémoire RAM2. A chaque nouveau bit transféré, un bit de parité est calculé en tenant compte de la parité des bits déjà reçus, le résultat du calcul est consigné dans le registre R8 de la mémoire RAM2. Le bit de fin de message qui sert aussi de bit de parité pour le message transmis est comparé au bit de parité calculé et mémorisé dans le registre R8, s'il y a égalité de valeur entre les deux bits la transmission sera reconnue comme correcte, sinon, cette anomalie sera signalée à l'émetteur par émission au niveau du récepteur du signal ER.

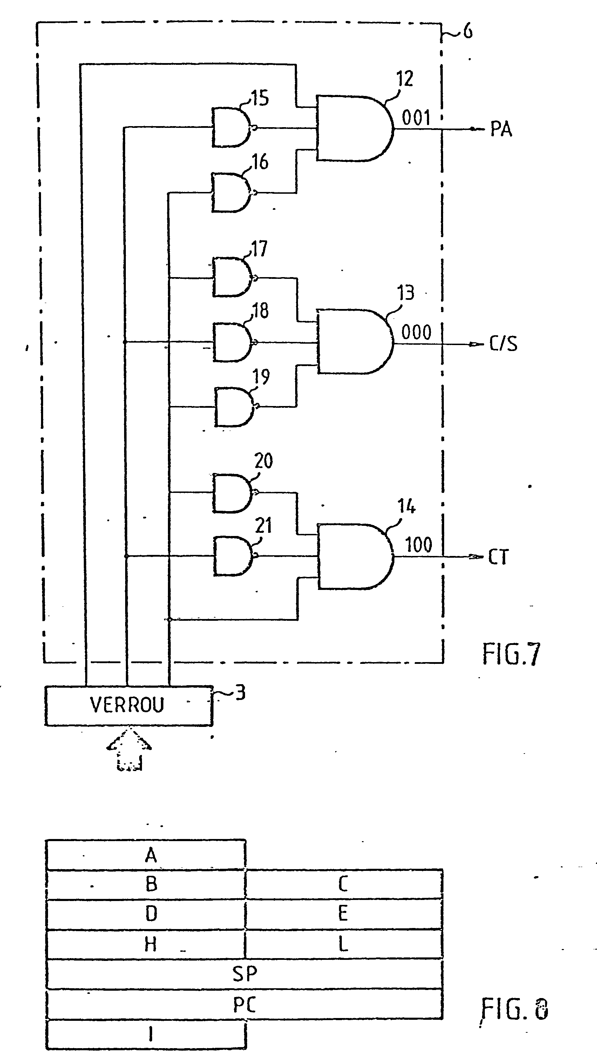

La figure 6 est une représentation du circuit PA7 de la figure 4. Ce circuit se compose des amplificateurs trois états 8 et 9 munis de leurs portes de commande 10 et 11. La sortie de l'amplificateur 8 est reliée à l'entrée de l'amplificateur 9, ces deux amplificateurs sont connectés au conducteur $1_3$ de façon à pouvoir utiliser l'amplificateur 8 pour transmettre les données (I/O) sur le conducteur $1_3$ et l'amplificateur 9 pour recevoir les données (I/O) transmises sur le conducteur $1_3$.

La porte 11 commande l'amplificateur 8 lorsqu'elle est sélectionnée, par la combinaison XXXXX001 reçue par l'organe de commande 6, par la ligne IO/M, et lorsqu'il s'agit d'un ordre d'écriture WR transmis par le microprocesseur 1. De même, la porte 10 commande l'amplificateur 9 lorsqu'elle est sélectionnée, par la combinaison XXXXX001, par la ligne IO/M et chaque fois qu'il s'agit d'un ordre de lecture RD transmis par le microprocesseur 1. Les amplificateurs 8 et 9 peuvent être initialisés par le signal RESET.

Le circuit de commande 6 est représenté sur la figure 7. Il s'agit d'un simple circuit de décodage des informations contenues dans le registre 5. Les circuits 12, 15 et 16 décodent le signal d'adresse XXXXX001 pour sélectionner le circuit PA7. Les circuits 13, 17, 18, 19 décodent le signal d'adresse XXXXX000 pour sélectionner le registre d'état C/S 5. Les circuits 14, 20 et 21 décodent le signal d'adresse XXXXX100 pour sélectionner le compteur de temps CT4.

La figure 8 donne une représentation des registres de travail contenus dans un microprocesseur du type 8080 ou 8085. Le registre A correspond à l'accumulateur.

Les registres B, C, D, E sont des registres de travail et sont spécialisés pour recevoir des données. Les registres H et L sont des registres d'adresse. Le registre SP contient l'adresse d'un registre de pile et est utilisé lors des interruptions de traitement pour pointer vers l'adresse d'une pile en mémoire pour sauver le contenu de certains registres du microprocesseur ou pour reprendre des traitements interrompus. Le registre PC est le compteur de programme et permet dans l'exécution d'un programme le passage à l'instruction suivante. Le registre I est un registre d'index qui permet l'adressage de données par indexation.

Les détails relatifs à la fonctionnalité de ces registres sont donnés dans le livre intitulé «les microprocesseurs» de Pierre le Beux et Rodnay Zaks édité par la société d'édition Sybex – 313 rue Lecourbe 75015 PARIS – C 1977.

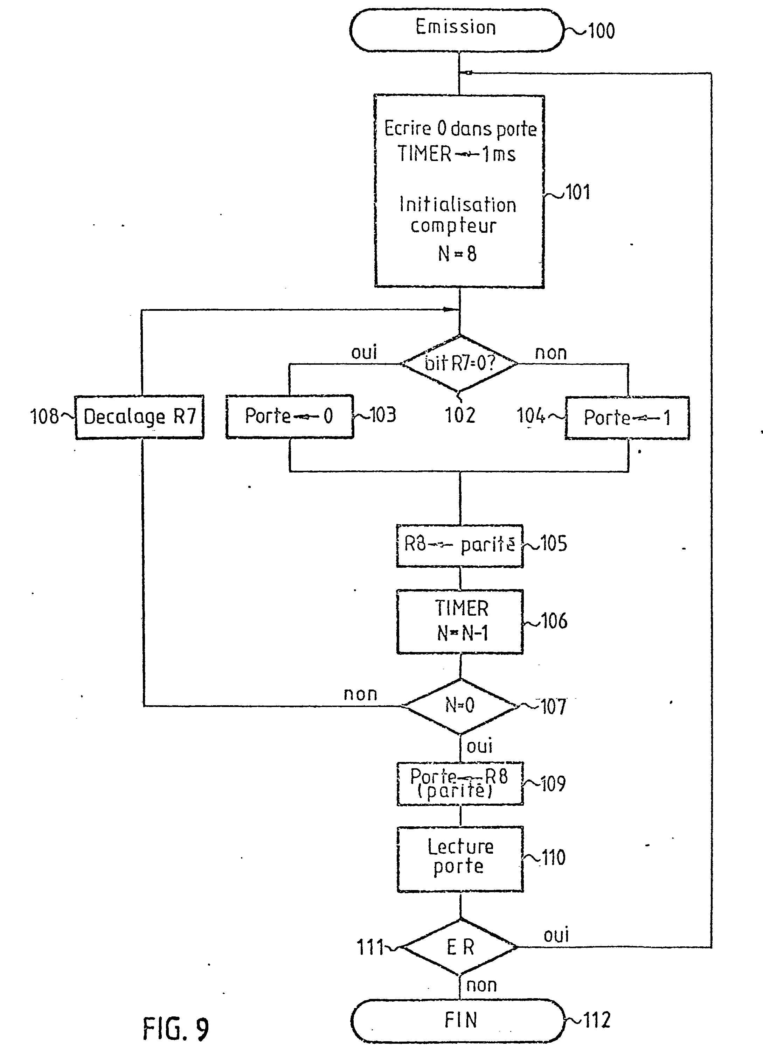

L'organigramme de la figure 9 représente les différentes étapes nécessaires au déroulement du programme exécuté par un microprocesseur émetteur. A l'étape 101 le microprocesseur émetteur positionne la ligne $1_3$ de liaison à l'état 0 logique et change le compteur de temps à la valeur du temps nécessaire pour l'émission du signal START et de l'octet qui suit de la façon représentée sur la figure 3. La fin de l'émission du signal START provoque une interruption du microprocesseur 1. L'octet à transférer contenu dans le registre R7 de la mémoire RAM2 est alors chargé dans le registre accumulateur A du microprocesseur 1 pour tester la valeur du premier bit (étape 102). La porte PA7 transmet la valeur correspondante du premier bit lu dans le registre R7 et sur le conducteur $1_3$ aux étapes 103 et 104. A l'étape 105 le bit de parité correspondant au message à transmettre est calculé et transmis dans une position de bit du registre R8 de la mémoire RAM2. A l'étape 108 le contenu du registre R7 est décalé d'une position binaire vers la gauche.

Ce processus se reproduit à chaque signal d'interruption délivré par le compteur de temps, il se termine lorsque tous les bits de l'octet ont été successivement transférés. L'étape 107 consiste à vérifier que tous les bits ont été transférés. A l'étape 109 le bit de parité mémorisé dans le registre R8 est à son tour transféré. Le récepteur peut alors calculer la parité des bits de l'octet reçu, au bit de parité qu'il a également reçu. S'il y a coïncidence le cycle de transmission s'achève (étape 112). S'il n'y a pas coïncidence, le récepteur signale à l'émetteur qu'il y a erreur (signal ER figure 3) et un nouveau cycle de transmission est exécuté à partir de l'étape 101.

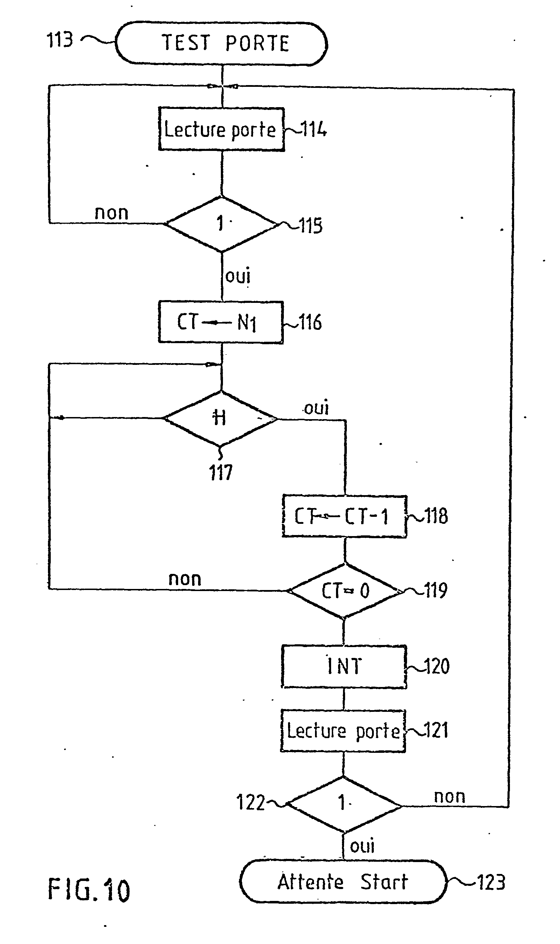

La figure 10 est un organigramme montrant les opérations effectuées par le récepteur lorsqu'il est en attente d'un message en provenance de l'émetteur. Ces tests se font par lectures répétées de l'état de la ligne de transmission $1_3$. A l'étape 114, la porte PA7 est lue de façon répétée tant que l'état de la ligne $1_3$ est à 0. Lorsque l'état de la ligne devient 1 (étape 115) le compteur CT4 est chargé à une valeur de temps prédéterminée (étape 116) de façon à occasionner une interruption du traitement du microprocesseur et provoquer une lecture de l'état de la porte PA7 lorsque cette valeur de temps est épuisée. Ce test a lieu à l'étape 122. Si à cette étape, l'état de la porte est à 1, le récepteur se met en attente du signal START, par contre, si l'état de la porte est à 0 il faut en conclure que le test effectué à l'étape 115 a eu lieu sur un parasite, le récepteur retourne alors à l'étape 114.

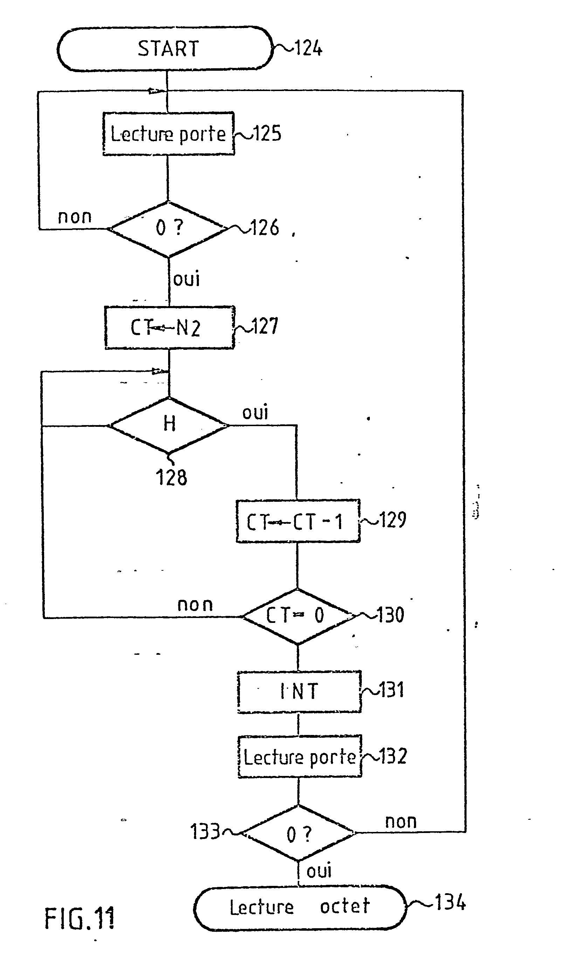

La figure 11 est une représentation de la séquence de réception du signal START. A l'étape 125 le récepteur lit l'état de la porte PA7. Le compteur de temps CT4 est chargé à une valeur de temps prédéterminée $N_2$ dès que l'état du conducteur $1_3$ prend la valeur 0. Cette valeur de temps est décrémentée à l'étape 129 au rythme de l'horloge interne du microprocesseur jusqu'à atteindre la valeur 0 (étape 130). Le passage à zéro du compteur CT provoque une interruption du microprocesseur qui effectue alors une opération de lecture de la porte PA7, si à cet instant de la sé-

quence le conducteur $1_3$ présente toujours la valeur 0, il y a confirmation qu'il s'agit bien d'un signal START et non d'un parasite, la lecture de l'octet (étape 134) pourra alors s'effectuer.

La figure 12 est une représentation de la séquence de lecture d'un octet. Le compteur de temps CT4 est chargé à une valeur de temps correspondant au temps nécessaire à la lecture des 8 bits transmis. Si la durée d'un bit est de 1 ms, la valeur du temps de transmission chargée dans le compteur CT4 est de 8 ms. Chaque transfert d'un bit provoque une interruption du microprocesseur récepteur (étape 136) pour l'autoriser à mémoriser dans le registre R7 le bit lu sur la porte PA7, effectuer un calcul de parité sur les bits déjà reçus avec celui qui vient d'être reçu et charger le résultat de calcul de la parité dans le registre R8 (étape 137). Lorsqu'un octet a été transféré dans le registre R7, le compteur CT4 prend l'état 0 en même temps qu'est reçu le bit de parité transmis par l'émetteur. Une comparaison a alors lieu entre le bit transféré par l'émetteur et le bit précédemment calculé et mémorisé dans le registre R8 du récepteur (étape 140). S'il y a correspondance entre les 2 bits de parité, la transmission s'est effectuée sans erreur et est considérée comme terminée, par contre s'il y a erreur de transmission, cette erreur est signalée à l'émetteur en forçant à l'état 0 le conducteur $1_3$ étape 142 et la séquence de test de l'état de la porte PA7 est reprise (étape 113).

Les séquences qui viennent d'être décrites pourront être réalisées à l'aide de la liste des instructions suivantes inscrites dans la mémoire PROM7bis de la figure 2 en utilisant les instructions du microprocesseur INTEL 8080.

### Emission

| | Instructions | Commentaires |
|---|---|---|
| 100 | OUT PA | Porte A ←----- O |
| 101 | LHLD | |
| 102 | MOVA, M | (Initialisation du compteur CT4) |
| 103 | MOV CT, A | CT ←----- A |
| 104 | LHLD | |
| 105 | MOV B, M | B ←----- O |
| | INT | (Interruption compteur de temps) |
| 106 | LDA | A ←----- 8 |
| 107 | SBB B | |
| 108 | JZ NEXT (114) | |
| 109 | LDA | A ←----- R7 |
| 10A | OUT PORTE A | |
| 10B | MOV C, A | C ←----- A |
| 10C | ANA | Masque 1 000 000 |
| 10D | XRA, M | Calcul de parité A $A_0$ ←----- $R_8$ + $A_0$ |
| 10E | LHLD | |
| 10F | MOV M, A | Parité dans R8 |
| 110 | MOV A, C | A ←----- R7 |
| 111 | RLC | décalage R7 |
| 112 | MOV M, A | R7 ←----- A |
| 113 | RET | |

| | Instructions | Commentaires |
|---|---|---|
| 114 | LDA | A ←----- R8 |
| 115 | OUT PORTE A | |
| 116 | NOP | |
| 117 | IN PORTE A | |
| 118 | CPI | si I = Erreur |
| 119 | JNC NEXT (100) | |
| 120 | RET | Fin |

### Test Porte

| | | |
|---|---|---|
| 11A | IN PORTE A | $A_0$ ←----- Etat de PA7 |
| 11B | CMP M | Comparer $A_0$ à 1 faire S = 1 dans PSW si ≠ |
| 11C | RM NEXT = (11A) | si S = 1 retour en 11A |
| 11D | LHLD | Charger H, L avec le contenu de la mémoire trouvé aux adresses qq et PP. A ⩾ N |
| 11F | MOV CT, A | CT ←----- N |
| 120 | RET | |

### START

| | | |
|---|---|---|
| 121 | IN PORTE A | |
| 122 | CMP M | Faire S 1 dans PSW si ≠ |
| 123 | RM NEXT (121) | Retour en 121 si S = 1 |
| 124 | LHLD | |
| 125 | MOV A, M | |
| 126 | MOV CT, A | |
| 127 | RET | |

### INT. START

| | | |
|---|---|---|
| 128 | PUSH PSW | Sauver A et PSW |
| 129 | IN PORTE A | |
| 12A | CMP M | Faire Z = O de PSW si porte = 0 |
| 12B | RM NEXT (128) | si Z = 1 retour en 128 |
| 12C | CNZ Lecture Octet | |

### LECTURE OCTET

| | | |
|---|---|---|
| 12D | LHLD | |
| 12E | MOV A, M | |
| 12F | MOV CT, A | |
| 130 | LX1 B | B ←----- O |
| 131 | RET | |
| | INT | |
| 132 | LHLD | |
| 133 | MOV A, M | |
| 134 | RLC | |
| 135 | MOV D, A | |
| 136 | IN PORTE A | |
| 137 | MOV E, A | |
| 138 | LHLD | Adressage de R8 |
| 139 | XRA | Parité dans A |
| 13A | MOV M, A | Parité dans R8 |
| 13B | MOV AE | |
| 13C | ORA D | |
| 13D | LHLD | Adressage de R7 |
| 13E | MOV M, A | R7 ←----- A |
| 13F | INX B | |

| | Instructions | Commentaires |
|---|---|---|
| 140 | LDA | A ←----- 8 |
| 141 | SBB B | |
| 142 | JP | Z ←------ 1 de PSW<br>sur = 0 |
| 143 | RET | |
| 144 | MOV A, E | |
| 145 | LHLD | Adressage de R8 |
| 146 | CMP M | |
| 147 | JZ NEXT (149) | Faire Z = 1 de PSW s'il y a<br>égalité |
| 148 | Fin | |
| 149 | OUT PORTE A | |
| 150 | CALL test<br>porte | |

Dans l'exemple de réalisation qui vient d'être décrit, la structure des informations émises ou reçues est fondée sur l'octet, il est bien évident que cette structure peut être quelconque et peut être étendue à un nombre de bits plus élevés.

L'octet contient des ordres ou des commandes, des données ou des adresses. Ces deux types d'informations sont multiplexés dans le temps sur la ligne. En cas d'erreur de transmission l'émetteur enverra à nouveau l'information pour laquelle il y a eu erreur de transmission. En principe, le réessai est unique avant une remise à zéro et une reprise du dialogue éventuelle.

Le dialogue est régit par une suite de codes opérations ou ordres qui sont reçus et interprétés par le récepteur afin d'assurer la sécurité du dialogue et le synchronisme des deux ensembles. La sécurité est obtenue en renvoyant à l'émetteur, lorsque cela est possible, une information significative.

Lorsque le support amovible effectue un traitement, la machine attend le signal de fin de traitement et inversement.

En dehors d'une phase de traitement, le support amovible est toujours en attente d'un ordre.

Le dialogue logique peut se décomposer en trois phases.

La première phase est constituée par la transmission d'un code «opération» de 8 bits de long qui est caractéristique du traitement à effectuer. Ce code «opération» est suivi d'une adresse de lecture ou d'écriture dans la mémoire du support amovible. Cette phase se termine par l'émission, en retour, du même code opération.

La deuxième phase recouvre soit l'échange de données en écriture ou en lecture, soit une action spécifique du support amovible. Lors d'un transfert de données, les deux sous-ensembles peuvent connaître avec exactitude le nombre d'octets à échanger.

La troisième phase indique que le support amovible a terminé le traitement sollicité par A et spécifié dans le code opération de la phase 1. Elle se compose d'un code FIN suivi d'un mot d'état caractéristique du traitement.

La transmission des octets successifs constituant les phases 1 à 3 pourra s'effectuer à l'aide des programmes déjà décrits précédemment.

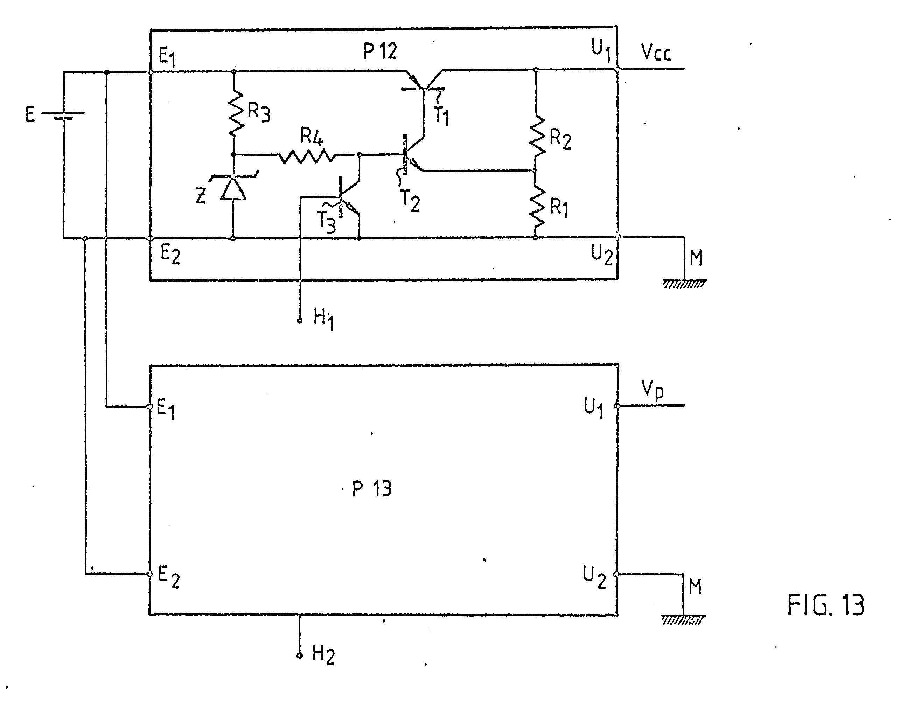

L'alimentation du support amovible par les sources de courant et de tension $P_{12}$ et $P_{13}$ est représentée à la figure 13.

Chaque bloc $P_{12}$ ou $P_{13}$ est lui-même alimenté à partir de l'alimentation secteur munie d'un dispositif de redressement du courant alternatif du dispositif sur les bornes E1 et E2 et fournit une tension E. Chacun des circuits $P_{12}$ et $P_{13}$ est constitué des transistors $T_1$, $T_2$ et $T_3$. Le transistor $T_1$ est commandé sur sa base par le collecteur du transistor $T_2$. L'émetteur du transistor $T_1$ est relié à l'entrée $E_1$ du circuit et son collecteur délivre la tension Vcc par rapport à la masse M du circuit. Une contre-réaction de la tension Vcc est appliquée sur l'émetteur du transistor $T_2$ par le diviseur de tension formé par les résistances R1 et R2 montées en diviseur potentiométrique entre le point U1 et la masse M du circuit. Une tension stable délivrée par la diode Zener Z est appliquée sur la base du transistor $T_2$ par l'intermédiaire de la résistance $R_4$. La diode Zener Z est alimentée à partir de la tension E par l'intermédiaire de la résistance $R_3$. Le montage est tel que la tension de sortie délivrée par les circuits $P_{12}$ et $P_{13}$ soit proportionnelle à la tension $V_7$ située aux bornes de la diode Zener Z, le rapport de proportionnalité étant R2 + R1. Le transistor $T_3$ permet lorsqu'il est commandé sur sa base par les signaux $H_1$ et $H_2$ de court-circuiter la fonction base/émetteur du transistor $T_2$ et donne ainsi la possibilité d'obtenir une tension nulle en sortie des circuits $P_{12}$ et $P_{13}$.

Ces particularités permettent d'une part d'alimenter le support amovible à n'importe quel instant après sa connection à la machine. Elles permettent aussi outre le fait d'alimenter le microprocesseur du support amovible à partir de la tension $V_{cc}$, de fournir en temps voulu une tension $V_p$ nécessaire à l'écriture d'informations dans la mémoire du circuit amovible.

### Revendications

1. Machine de bureau pour l'acquisition de données et le traitement de l'information, comprenant un premier moyen (M4; P5) d'introduction manuelle de données tel qu'un clavier, un deuxième moyen (M8; P1; 1) de traitement de l'information, un troisième moyen de réception (M2, M6) d'au moins un support portatif amovible (M3), un quatrième moyen de connexion électrique entre la machine et le support portatif (M3) qui peuvent indifféremment jouer le rôle d'émetteur et de récepteur, caractérisée en ce que le quatrième moyen de connexion électrique est constitué par une liaison électrique unique ($I_3$), sur laquelle les informations sont transmises au moyen des variations d'un seul et même signal, le support portatif et la machine comprenant chacun des moyens (1, 6, PA7) qui émettent un signal (PR) pour placer ladite liaison ($I_3$) dans un premier état temporaire prédéterminé pour signaler à l'émetteur que le récepteur est prêt à recevoir des informations, des moyens (1, 6, PA7) dans l'émetteur pour détecter cet état prédéterminé, des moyens (1, 6, PA7) pour faire émettre par l'émetteur un signal (START) suivi d'un message sous forme binaire enregistré dans une mémoire (RAM2), des moyens (1) pour calculer dans l'émetteur et transmettre au récepteur le bit de parité du message, des moyens (1) dans le récepteur pour calculer le bit de parité du message reçu et le comparer avec le bit de parité reçu, et des moyens (1) pour placer ladite liaison ($l_3$) dans un second état temporaire prédéterminé (signal ER) pour signaler à l'émetteur une erreur de transmission lorsque les deux bits de parité ne sont pas égaux.

2. Machine selon la revendication 1, caractérisée en ce que les moyens (1, 6, PA7) sont constitués par un microprocesseur (1), par des circuits de commande (6) et par un dispositif d'entrée-sortie (PA7).

3. Machine selon la revendication 1 ou 2, caractérisée en ce que la machine et le support comprennent chacun une mémoire (7bis) non volatile qui contient des microprogrammes nécessaires à la transmission et à la réception des données, et en ce qu'elle comprend des moyens (P13) de fourniture de la tension d'écriture (Vp) de la mémoire du support amovible (M3).

4. Machine selon l'une des revendications précédentes, caractérisée en ce qu'elle est équipée d'une unité d'affichage (M5; P4).

## Claims

1. Office machine for data entry and information processing, comprising a first means (Me; P5) for the manual entry of data such as a keyboard, a second means (M8; P1; 1) for processing information, a third means (M2, M6) for receiving at least one removable and portable support (M3), a fourth means for establishing electrical connection between the machine and the portable support (M3) which may act both as a transmitter and as a receiver, characterised in that the fourth electrical connection means if formed by a single (electrical connection ($l_3$) through which the information is transmitted by means of the variations of one and the same signal, the portable support and the machine each comprising means (1, 6, PA7) which transmit a signal (PR) to place the said connection ($l_3$) in a first predetermined temporary state for indicating to the transmitter that the receiver is ready to receive data, means (1, 6, PA7) in the transmitter for detecting this predetermined state in the transmitter, means (1, 6, PA7) for causing the ransmitter to transmit a (START) signal followed by a message in binary form recorded in a memory (RAM 2), means (1) for calculating the parity bit of the message in the transmitter and for transmitting the same to the receiver, means (1) in the receiver for calculating the parity bit of the message received and for comparing the same with the parity bit received, and means (1) for placing the said connection ($l_3$) in a second predetermined temporary state (signal ER) for indicating to the transmitter an error of transmission if the two parity bits are not equal.

2. Machine according to claim 1, characterised in that the means (1, 6, PA7) comprise a microprocessor (1), control circuits (6) and an input-output device (PA7).

3. Machine according to claim 1 or 2, characterised in that the machine and the support each comprise a non-volatile memory (7bis) containing microprograms required for transmission and reception of data, and in that it comprises means (P13) for providing the write voltage ($V_P$) of the memory of the removable support (M3).

4. Machine according to one of the preceding claims, characterised in that it is equipped with a display unit (M5; P4).

## Patentansprüche

1. Büromaschine zur Erfassung von Daten und zur Informationsverarbeitung, mit einer ersten Einrichtung (M4; P5) zur manuellen Eingabe von Daten, wie eine Tastatur, einer zweiten Einrichtung (M8; P1; 1) zur Informationsverarbeitung, einer dritten Einrichtung (M2, M6) zum Empfangen wenigstens eines tragbaren entfernbaren Trägers (M3), einer vierten Einrichtung zur elektrischen Verbindung zwischen der Maschine und dem tragbaren Träger (M3), welche beliebig als Sender und als Empfänger arbeiten können, dadurch gekennzeichnet, dass die vierte Einrichtung zur elektrischen Verbindung durch eine einzige elektrische Verbindung ($l_3$) gebildet ist, auf der die Informationen mittels Änderungen ein und desselben Signals übertragen werden, wobei der Träger und die Maschine jeweils versehen sind mit Mitteln (1, 6, PA7), die ein Signal (PR) aussenden, um die genannte Verbindung ($l_3$) in einen ersten vorbestimmten und vorübergehenden Zustand zu versetzen, um dem Sender zu signalisieren, dass der Empfänger zum Empfang von Informationen bereit ist, Mitteln (1, 6, PA7) in dem Sender, um diesen vorbestimmten Zustand zu erfassen, Mitteln (1, 6, PA7), um den Sender zu veranlassen, ein Signal (START) auszusenden, auf das eine Nachricht in Binärform folgt, welche in einem Speicher (RAM 2) aufgezeichnet wurde, Mitteln (1) zur Berechnung des Paritätsbits der Nachricht in dem Sender und zur Übertragung desselben zu dem Empfänger, Mitteln (1) im Empfänger zur Berechnung des Paritätsbits der empfangenen Nachricht und zum Vergleichen desselben mit dem empfangenen Paritätsbit, und Mitteln (1), um die genannte Verbindung ($l_3$) in einen zweiten vorbestimmten und vorübergehenden Zustand (Signal ER) zu versetzen, um dem Sender einen Übertragungsfehler zu signalisieren, wenn die zwei Paritätsbits nicht gleich sind.

2. Maschine nach Anspruch 1, dadurch gekennzeichnet, dass die genannten Mittel (1, 6, PA7) durch einen Mikroprozessor (1), durch Steuerschaltungen (6) und durch eine Ein-Ausgabevorrichtung (PA7) gebildet sind.

3. Maschine nach Anspruch 1 oder 2, dadurch gekennzeichnet, dass die Maschine und der Träger jeweils mit einem nichtflüchtigen Speicher (7bis) versehen sind, welcher Mikroprogramme enthält, die für die Übertragung und den Empfang der Daten erforderlich sind, und dass sie Mittel (P13) zum Liefern der Schreibspannung (Vp) des Speichers des beweglichen Trägers (M3) umfasst.

4. Maschine nach einem der vorstehenden Ansprüche, dadurch gekennzeichnet, dass sie mit einer Anzeigeeinheit (M5; P4) ausgestattet ist.

FIG.1

FIG.2

FIG. 3

FIG. 4b

E ⌐  ⌐start┊Cb7 Cb6 Cb5 Cb4 Cb3 Cb2 Cb1 Cb0 PAR┐

R ⎯⎯ PR ─────────────────────────────────────── V₀

Reception ⎯ ER ⎯ V₁

## FIG.5

WR

AD xxxxxoo1 ⟩ 11

IO/M

I/O ▷ 8

RESET

I/O 3 Ligne

▷ 9

RD

10 ⟨

PA ~7

## FIG.6

FIG.7

FIG. 8

0 048 663

FIG. 9

113 ～ ( TEST PORTE )

Lecture porte ～114

non ◇ 1 ～115

oui

CT ← N1 ～116

H 117 oui

CT ← CT-1 ～118

non ◇ CT = 0 ～119

INT ～120

Lecture porte ～121

122 ～ ◇ 1 non

oui

( Attente Start ) ～123

FIG. 10

FIG.11

FIG. 12

FIG. 13